(19) Europäisches Patentamt / European Patent Office / Office européen des brevets

(11) **EP 4 502 687 A1**

(12) **EUROPEAN PATENT APPLICATION**
published in accordance with Art. 153(4) EPC

(43) Date of publication:
05.02.2025 Bulletin 2025/06

(21) Application number: 23779006.8

(22) Date of filing: 17.02.2023

(51) International Patent Classification (IPC):
*G02B 6/36* (2006.01)

(52) Cooperative Patent Classification (CPC):
G02B 6/36

(86) International application number:
PCT/JP2023/005809

(87) International publication number:
WO 2023/188976 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.03.2022 JP 2022052129

(71) Applicant: SUMITOMO ELECTRIC INDUSTRIES, LTD.
Osaka-shi, Osaka 541-0041 (JP)

(72) Inventors:
• MORISHIMA Tetsu
Osaka-shi, Osaka 541-0041 (JP)
• HAJI Kohei
Osaka-shi, Osaka 541-0041 (JP)

(74) Representative: TBK
Bavariaring 4-6
80336 München (DE)

(54) **OPTICAL CONNECTOR FERRULE AND OPTICAL CONNECTOR**

(57) An optical connector ferrule according to one embodiment makes it possible for tip portions of a plurality of optical fibers to be inserted straight into a plurality of through-holes that are in a one-to-one correspondence therewith without being twisted and rotated. This optical connector ferrule is mounted to the tip portion of the optical fiber, and comprises a front end surface, a rear opening, and a plurality of through-holes. Each through-hole includes a fiber hole and a fiber introduction hole. At least one flat surface among a plurality of surfaces that define an interior space of the optical connector ferrule supports the optical fiber such that the central axis of the corresponding optical fiber matches the central axis of the fiber hole.

FIG. 4

## Description

TECHNICAL FIELD

The present disclosure relates to an optical connector ferrule and an optical connector. This application claims priority based on Japanese Patent Application No. 2022-052129 filed on March 28, 2022, and the entire contents of the Japanese patent application are incorporated herein by reference.

BACKGROUND ART

The MT ferrule, which is a ferrule for a multi-fiber connector integrally attached to the end portions of a plurality of optical fibers, is a resin-molded part having a glass portion from which a coating is removed, that is, a fiber hole having a diameter equal to that of a clad for positioning the clad of each optical fiber, and a fiber introduction hole having a diameter equal to that of the coating for inserting the fiber into the fiber hole with good workability, as a general structure. In recent years, as disclosed in, for example, Non-patent literature 1, research on the design and performance improvement of such a multi-core connector has been actively conducted.

CITATION LIST

NON PATENT LITERATURE

Non-patent literature 1: Masaki OHMURA, et al. "Multi-Fiber Connectors for Data Center Applications", SEI TECHNICAL REVIEW, NUMBER 86, APRIL, 2018, pp.29-34

SUMMARY OF INVENTION

An optical connector ferrule of the present disclosure is configured to be attached to end portions of a plurality of optical fibers each including a glass portion and a coating covering the glass portion, the coatings being partially removed at the end portions. It is noted that, in the glass portion, one or more cores and an impurity doped region such as a refractive index providing member are surrounded by a cladding. The optical connector ferrule of the present disclosure has a front end surface at which a plurality of opening ends configured to allow end surfaces of the plurality of optical fibers to be exposed therethrough are located, a rear opening configured to allow the plurality of optical fibers to be introduced into an internal space of the optical connector ferrule, and a plurality of through holes into each of which a corresponding one of the plurality of optical fibers is to be inserted, the plurality of through holes each extending between a corresponding one of the plurality of opening ends and the internal space along a first direction from the front end surface toward the rear opening.

Here, the plurality of opening ends is arranged such that centers of the plurality of opening ends forms one or more rows along a second direction perpendicular to the first direction. Each of the plurality of through holes includes a fiber hole with one of the opening ends and a fiber introduction hole allowing communication between the fiber hole and the internal space. The fiber hole has a diameter larger than an outer diameter of the glass portions and smaller than an outer diameter of the coatings. The fiber introduction holes includes an introduction portion having a diameter larger than the outer diameter of each of the coatings and a taper portion allowing communication between the introduction portion and a corresponding one of the fiber holes. The internal space is defined by a plurality of surfaces. At least one flat surface among the plurality of surfaces is configured to support the plurality of optical fibers such that a central axis of each of the plurality of optical fibers coincides with a central axis of a corresponding one of the fiber holes extending in the first direction.

BRIEF DESCRIPTION OF THE DRAWINGS

FIG. 1 is a diagram for explaining the structure of various optical fibers to which optical connector ferrules of the present disclosure are attached.
FIG. 2 is a diagram for explaining an example of the structure of the optical connector ferrule of the present disclosure.
FIG. 3 is a diagram for explaining an optical fiber mounting operation in a manufacturing process of a standard optical connector.
FIG. 4 is a diagram for explaining the various structures of the optical connector ferrule according to the first embodiment of the present disclosure and the optical fiber mounting operation in the manufacturing process of the optical connector of the present disclosure.
FIG. 5 is a diagram for explaining the various structures of a support including a flat surface provided in the optical connector ferrule according to the first and second embodiments of the present disclosure.
FIG. 6 is a diagram for explaining still another structure of a support including a flat surface provided in the optical connector ferrule according to the first and second embodiments of the present disclosure.
FIG. 7 is a diagram for explaining the various structures of the fiber holding member applicable to the optical connector ferrule according to the second embodiment of the present disclosure.
FIG. 8 is a diagram for explaining an example of the structure of the optical connector ferrule according to the second embodiment of the present disclosure, an optical fiber mounting operation in the manufacturing process of the optical connector of the present disclosure, and the cross-sectional structure of the optical connector of the present disclosure.

DETAILED DESCRIPTION

[Problems to be Solved by Present Disclosure]

The inventors have studied the above-described conventional techniques and have found the following problems. That is, when the glass portion which is the end portion of the optical fiber and from which the coating is removed is inserted into the fiber hole, the optical fiber inserted into the optical connector ferrule body functioning as a housing may be twisted or rotated. Such a change in the installation state at the time of insertion of the optical fiber causes an angular deviation between optical fibers to be optically connected when coincides with the optical connector ferrule is attached to the optical fiber that requires rotational adjustment. This is considered to be caused by the fact that the end portion of the optical fiber is obliquely inserted into the fiber hole when the optical connector ferrule is attached to the optical fiber. As a result, when the optical connector ferrule is attached to the plurality of optical fibers, there is a problem that the installation states of the plurality of optical fibers are different from each other.

The present disclosure has been made to solve the above-described problems, and aims to provide an optical connector ferrule and optical connector with a structure that makes it possible for a plurality of optical fibers to be inserted into a plurality of fiber holes provided in one-to-one correspondence in a straight manner without causing twisting or rotation.

[Advantageous Effects of the Present Disclosure]

According to the optical connector ferrule of the present disclosure, when the optical connector ferrule is mounted on each of the plurality of optical fibers, the end portion of each optical fiber can be straightly inserted into the corresponding fiber hole provided in one-to-one correspondence, and the optical fibers inserted into each of the plurality of fiber holes are effectively suppressed from being twisted and rotated.

[Description of Embodiments of Present Disclosure]

First, the contents of embodiments of the present disclosure will be described by listing them individually.

(1) An optical connector ferrule of the present disclosure is configured to be attached to end portions of a plurality of optical fibers each including a glass portion and a coating covering the glass portion, the coatings being partially removed at the end portions. It is noted that, in the glass portion, one or more cores and an impurity doped region such as a refractive index providing member are surrounded by a cladding. The optical connector ferrule of the present disclosure has a front end surface at which a plurality of opening ends configured to allow end surfaces of the plurality of optical fibers to be exposed therethrough are located, a rear opening configured to allow the plurality of optical fibers to be introduced into an internal space of the optical connector ferrule, and a plurality of through holes into each of which a corresponding one of the plurality of optical fibers is to be inserted, the plurality of through holes each extending between a corresponding one of the plurality of opening ends and the internal space along a first direction from the front end surface toward the rear opening.

Here, the plurality of opening ends is arranged so that the centers of the plurality of opening ends constitute one or more rows along the second direction defined on the front end face and perpendicular to the first direction. Each of the plurality of through holes includes a fiber hole with one of the opening ends and a fiber introduction hole connecting between the fiber hole to the internal space. The fiber hole has a diameter larger than an outer diameter of the glass portion and smaller than an outer diameter of the coating. The fiber introduction hole includes an introduction portion having a diameter larger than the outer diameter of each of the coatings and a taper portion connecting the introduction portion to a corresponding one of the fiber holes. The internal space is defined by a plurality of surfaces. At least one flat surface among the plurality of surfaces is configured to support the plurality of optical fibers such that a central axis of each of the plurality of optical fibers coincides with a central axis of a corresponding one of the fiber holes extending in the first direction. In this specification, "coincide" includes both the case where the central axis of the fiber hole and the central axis of the optical fiber completely coincide and the case where they substantially coincide within the range of manufacturing error or the like, and indicates a state where the end surface of the glass portion of the supported optical fiber is accommodated in the fiber introduction hole when the end surface of the glass portion is viewed from the front end surface toward the rear opening.

According to the optical connector ferrule of the present disclosure, a flat surface for defining an insertion angle of each optical fiber is provided in the optical connector ferrule. Thus, when the optical fibers are mounted, the end portions of the optical fibers can be straightly inserted into the corresponding fiber holes provided in one-to-one correspondence. Further, the optical fibers inserted into each of the plurality of fiber holes are effectively suppressed from being twisted and rotated.

(2) In the above (1), a length a of each of the fiber holes defined along the first direction, a length b of each of the fiber introduction holes defined along the first direction, and a length c of the flat surface defined along the first direction may satisfy a relationship of a first condition: a<b+c. In order to insert the end portion of each optical fiber straight into the fiber hole, it is necessary for the optical fiber to make contact with the flat surface before insertion. In addition, the end surface of each optical fiber needs to be exposed on the front end surface. Thus, the length of the glass portion of each optical fiber, from which a part of the coating is removed, needs to be equal to or longer than the length a of each fiber hole.

(3) In the above (1), a length a of each of the fiber holes defined along the first direction and a length c of the flat surface defined along the first direction may satisfy a relationship of a second condition: a<c. The end portion of each optical fiber can be inserted straight into the fiber hole.

(4) In the above (1), a length b of each of the fiber introduction holes defined along the first direction and a length c of the flat surface defined along the first direction may satisfy a relationship of a third condition: b≤c. In this case as well, the end portion of each optical fiber can be straightly inserted into the fiber hole.

(5) In any one of (1) to (4), the flat surface may include a plurality of flat regions formed by dividing the flat surface along at least one of the first and second directions. In the case of a support having a flat surface, when the flat surface is formed of a plurality of flat regions, the support is also formed of a plurality of support portions. In such a configuration, the plurality of support portions are disposed with a space interposed therebetween, and the space between the support portions functions as a resin reservoir in which an adhesive (for example, an ultraviolet curable resin) is retained. Thus, it is possible to directly or indirectly firmly support the plurality of optical fibers with respect to the flat surface.

(6) An optical connector of the present disclosure includes the optical connector ferrule according to any one of (1) to (5), the plurality of optical fibers, and a fiber holding member configured to hold the plurality of optical fibers in a state where the plurality of optical fibers are arranged in one or more rows along the second direction. The fiber holding member is placed on the flat surface while holding the plurality of optical fibers. In particular, the fiber holding member is placed on the flat surface in a state of holding the plurality of optical fibers. In a state in which the fiber holding member is placed on the flat surface, a central axis of a corresponding optical fiber of the plurality of optical fibers substantially coincides with a central axis extending along the first direction of each of the plurality of fiber holes.

(7) In the above (6), the fiber holding member may constitute a tape fiber including a plurality of optical fibers. Specifically, the fiber holding member may be a resin layer configured to integrally hold the coatings of the plurality of optical fibers and configured to suppress positional deviations between the plurality of optical fibers. In this case, in a state in which the plurality of optical fibers are arranged in one or more rows along the second direction, the end portion of the plurality of optical fibers can be integrally introduced into the internal space of the housing.

(8) In the above (6), the fiber holding member may have V grooves configured to hold the plurality of optical fibers in a state where the glass portions or the coatings of the plurality of optical fibers are in contact with the V grooves. In this case, as in the case of (7), the end portion of the plurality of optical fibers can be integrally introduced into the internal space of the housing in a state in which the plurality of optical fibers are arranged in one or more rows along the second direction.

(9) In the above (6), the fiber holding member may include a hole array configured to hold the plurality of optical fibers in a state where the hole array is in contact with the glass portions or the coatings of the plurality of optical fibers. In this case, as in the above (7) and (8), the end portion of the plurality of optical fibers can be integrally introduced into the internal space of the housing in a state in which the plurality of optical fibers are arranged in one or more rows along the second direction.

(10) In any one of (6) to (9), each of the plurality of optical fibers may be any one of a multi-core optical fiber, a polarization maintaining fiber, and a bundle fiber. Since all of these optical fibers require rotational adjustment, they are suitable for the mounting target of the optical connector ferrule of the present disclosure having a structure that can be inserted straight while suppressing twisting and rotation of the end portion that occur when inserting the optical fiber into the fiber hole.

[Details of Embodiments of the Present Disclosure]

Hereinafter, an optical connector ferrule and a specific structure of an optical connector of the present disclosure will be described in detail with reference to the accompanying drawings. It is noted that, the present disclosure is not limited to these examples, but is defined by the scope of the claims, and is intended to include all modifications within the meaning and scope equivalent to the scope of the claims. Further, in the description of the drawings, the same elements are denoted by the same reference numerals, and redundant description thereof will be omitted.

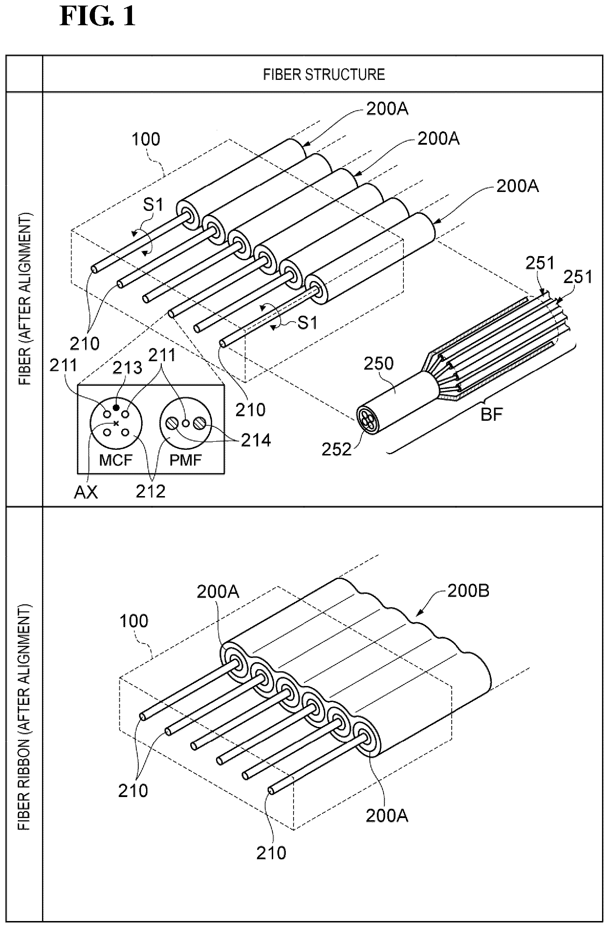

FIG. 1 is a diagram for explaining the structure of various optical fibers to which the optical connector ferrules of the present disclosure are attached (referred to as "fiber structure" in FIG. 1). It is noted that, the optical connector of the present disclosure is configured by an optical fiber and an optical connector ferrule attached to the end of the optical fiber. The upper row of FIG. 1 (referred to as "fiber (after alignment)" in FIG. 1) shows a plurality of optical fibers 200A to which an optical connector ferrules 100 are attached in a state where the optical fibers are arranged in a row such that the fiber axes are perpendicular to a common predetermined direction. The lower row of FIG. 1 (referred to as "fiber ribbon (after alignment)" in FIG. 1) shows a fiber ribbon 200B (including the plurality of optical fibers 200A) to which optical connector ferrule 100 is attached.

As shown in the upper row of FIG. 1, each of the plurality of optical fibers 200A is rotationally adjusted along an adjustment direction S1, and then optical connector ferrule 100 is mounted. Optical connector ferrule 100 substantially functions as a housing (resin-molded component) that partially houses the end portion of each of the plurality of optical fibers 200A. Further, each of the plurality of optical fibers 200A includes a glass portion (a glass optical fiber 210) having a cross-sectional structure that requires alignment, and a resin coating that surrounds the outer periphery of glass optical fiber 210. Examples of the glass optical fiber that requires alignment include a multi-core optical fiber (MCF) and a polarization maintaining optical fiber (PMF). In addition, a bundle fiber BF is applicable to each of the plurality of optical fibers 200A.

Here, a multi-core optical fiber MCF includes a plurality of cores 211 each extending along a central axis AX (fiber axis), a marker 213 used for rotational adjustment, and a common cladding 212 surrounding cores 211 and marker 213. A polarization maintaining optical fiber PMF includes core 211 extending so as to include a central axis, stress applying members 214 extending along core 211 in a state of being positioned across core 211, and common cladding 212 surrounding core 211 and stress applying members 214. When multi-core optical fiber MCF and polarization maintaining optical fiber PMF are connected to another multi-core optical fiber MCF and another polarization maintaining optical fiber PMF, it is necessary to perform rotational adjustment in advance in order to optically connect the corresponding cores to each other. Bundle fiber BF has a structure in which a plurality of single-core optical fibers 251 is bundled, and substantially requires rotational adjustment as in multi-core optical fiber MCF or the like. Each of the plurality of single-core optical fibers 251 includes a single-core glass optical fiber 252 and a coating surrounding single-core glass optical fiber 252. Specifically, in bundle fiber BF, the end portions of the plurality of single-core optical fibers 251 from which the coatings are removed, that is, single-core glass optical fibers 252 from which the coatings are removed are inserted into a storage container 250.

As described above, a glass optical fiber requiring rotational alignment, such as a multi-core optical fiber MCF, a polarization maintaining optical fiber PMF, or a bundle fiber BF, is applied to each of the glass optical fibers 210. After the rotational alignment, the optical connector ferrule 100 is attached to the plurality of tip portions of the plurality of optical fibers 200A having the plurality of tip portions from which the coating is removed.

It is noted that, the plurality of optical fibers 200A, each of which has been rotationally adjusted as described above, may constitute fiber ribbon 200B as shown in the lower row of FIG. 1. That is, in fiber ribbon 200B, the plurality of optical fibers 200A are integrally covered with the resin coating while maintaining the alignment state without changing the relative positions of the plurality of optical fibers 200A after the rotational adjustment and before the attachment of optical connector ferrule 100. In this way, the resin coating that integrally covers the plurality of optical fibers 200A functions as a fiber holding member.

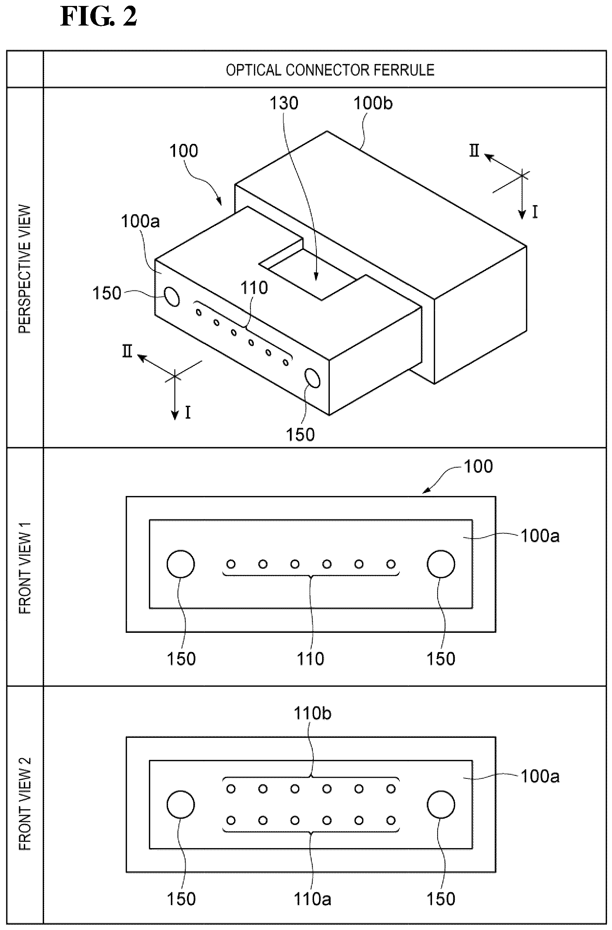

FIG. 2 is a diagram for explaining an example of the structure of the optical connector ferrule of the present disclosure (referred to as "optical connector ferrule" in FIG. 2). The upper row of FIG. 2 (referred to as "perspective view" in FIG. 2) shows an example (perspective view) of the optical connector ferrule of the present disclosure. The middle row of FIG. 2 (referred to as "front view 1" in FIG. 2) shows an example of the front view of the optical connector ferrule of the present disclosure. The lower row of FIG. 2 (referred to as "front view 2" in FIG. 2) shows another example of the front view of the optical connector ferrule of the present disclosure.

As shown in the upper row of FIG. 2, optical connector ferrule 100 of the present disclosure functions as a housing for partially housing the end portion of the plurality of optical fibers 200A, that is, glass optical fiber 210 from which the coating is removed. Optical connector ferrule 100 is a resin-molded component including a front end surface 100a and a rear opening 100b. On front end surface 100a, opening ends of a plurality of fiber holes 110 for positioning an end portion of the plurality of optical fibers 200A and opening ends of guide holes 150 for aligning fiber holes 110 of optical connector ferrule 100 with fiber holes of another optical connector ferrule are provided. The plurality of fiber holes 110 extends along the first direction perpendicular to front end surface 100a. It is noted that, the first direction is a direction from front end surface 100a to the opening end of rear opening 100b. Further, optical connector ferrule 100 is provided with an adhesive introduction opening 130 between front end surface 100a and rear opening 100b, into which an adhesive such as an ultraviolet curable adhesive for fixing the plurality of optical fibers 200A to optical connector ferrule 100 is introduced.

It is noted that, the plurality of fiber holes 110 disposed on front end surface 100a is arranged in a row along the second direction perpendicular to the first direction, for example, as shown in the middle row of FIG. 2. In addition, as shown in the lower row of FIG. 2, the plurality of fiber holes 110 may be divided into a plurality of first fiber holes 110a and a plurality of second fiber holes 110b such that the groups are arranged in parallel along the second direction. The group of the plurality of first fiber holes 110a and the group of the plurality of second fiber holes 110b are arranged in a row along the second direction.

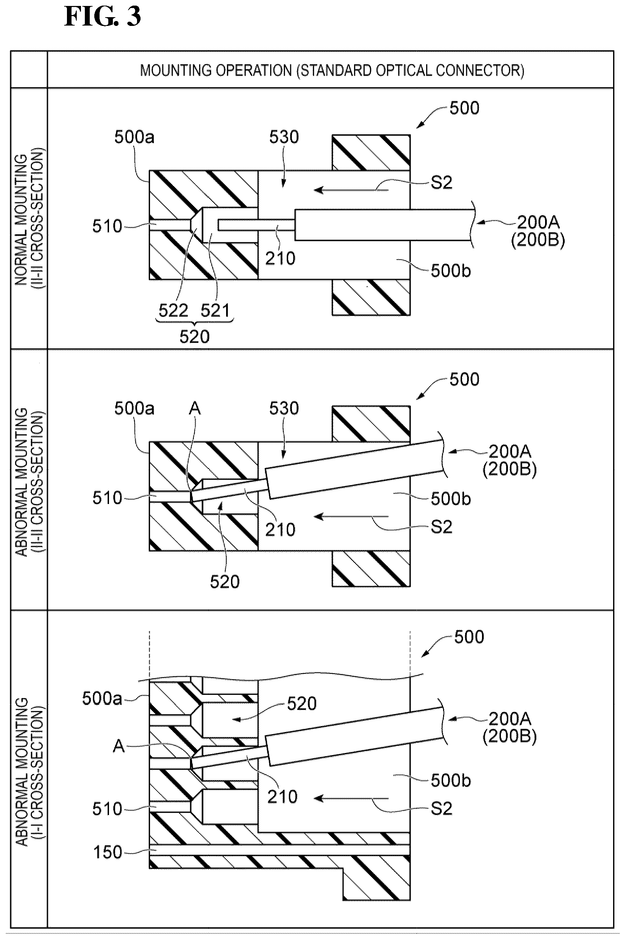

FIG. 3 is a diagram for explaining an optical fiber mounting operation in a manufacturing process of a standard optical connector (referred to as "mounting operation (standard optical connector)" in FIG. 3). The upper row of FIG. 3 (referred to as "normal mounting (II-II cross-section)" in FIG. 3) shows an operation in which standard an optical connector ferrule 500 is normally mounted on each end portion of the plurality of optical fibers 200A or each end portion of fiber ribbon 200B. The middle row of FIG. 3 (referred to as "abnormal mounting (II-II cross-section)" in FIG. 3) shows an operation in which standard optical connector ferrule 500 is abnormally mounted on each end portion of the plurality of optical fibers 200A or each end portion of fiber ribbon 200B. The lower row of FIG. 3 (referred to as "abnormal mounting (I-I cross-section)" in FIG. 3) shows an operation in which standard optical connector ferrule 500 is abnormally mounted on each end portion of the plurality of optical fibers 200A or each end portion of fiber ribbon 200B.

In the upper row of FIG. 3, optical connector ferrule 500 having a cross-section taken along the line II-II shown in the upper row of FIG. 2 is shown as a part of a standard optical connector. Further, optical connector ferrule 500 of the standard optical connector includes a front end surface 500a and a rear opening 500b. Optical connector ferrule 500 has an opening end on front end surface 500a, and is provided with a plurality of fiber holes 510 extending along the first direction from front end surface 500a toward the opening end of rear opening 500b, a plurality of fiber introduction holes 520 provided in one-to-one correspondence to the plurality of fiber holes 510, and an adhesive introduction opening 530 into which an adhesive such as an ultraviolet curable resin is introduced. Illustrated fiber hole 510 of the plurality of fiber holes 510 has a diameter that is smaller than the coating outer diameter of corresponding optical fiber 200A and larger than the outer diameter of corresponding glass optical fiber 210. However, in order to enable accurate positioning of optical fiber 200A, the diameter of fiber hole 510 may be approximately equal to the outer diameter of corresponding glass optical fiber 210. In addition, fiber introduction hole 520 shown in the drawing among the plurality of fiber introduction holes 520 has an introduction portion 521 and a taper portion 522. Introduction portion 521 has a diameter larger than the outer diameter of the coating of corresponding optical fiber 200A. Taper portion 522 communicates with corresponding fiber hole 510 and introduction portion 521. However, in order to enable optical fiber 200A to be accurately located, the diameter of fiber introduction hole 520 may be approximately equal to the coating outer diameter of corresponding optical fiber 200A.

In the case of the example shown in the upper row of FIG. 3, since glass optical fiber 210 after the rotational adjustment is inserted straight into fiber hole 510 along an insertion direction S2, the friction that the outer circumferential surface of glass optical fiber 210 receives from fiber hole 510 is uniform regardless of the location. Thus, optical fiber 200A itself does not rotate. This means that the alignment state of optical fiber 200A is maintained well even after optical connector ferrule 500 is attached to the end portion of optical fiber 200A.

On the other hand, the middle row of FIG. 3 also shows a cross-sectional view of optical connector ferrule 500 constituting a part of the standard optical connector, taken along the line II-II shown in the upper row of FIG. 2. The lower row of FIG. 3 shows a cross-sectional view of optical connector ferrule 500 along the line II-II shown in the upper row of FIG. 2. Since fiber hole 510 shown in the drawing among the plurality of fiber holes 510 has a diameter equal to the outer diameter of corresponding glass optical fiber 210, friction occurs between glass optical fiber 210 inserted along insertion direction S2 and fiber hole 510. Since it is difficult to perform the rotational adjustment of optical fiber 200A after glass optical fiber 210 is inserted into fiber hole 510 due to the friction, the rotational adjustment of optical fiber 200A is generally performed before the insertion. However, depending on the insertion angle of glass optical fiber 210 with respect to fiber hole 510, glass optical fiber 210 itself may be twisted or rotated due to friction between fiber hole 510 and glass optical fiber 210 at a contact point A. That is, as shown in the middle row of FIG. 3 and the lower row of FIG. 3, when glass optical fiber 210 obliquely enters fiber hole 510, strong friction is generated in a portion of the outer circumferential surface of glass optical fiber 210. Here, the oblique entrance of glass optical fiber 210 into fiber hole 510 means that glass optical fiber 210 enters fiber hole 510 from the upper left, the lower left, the upper right, or the lower right when fiber hole 510 is viewed from rear opening 500b. In this case, glass optical fiber 210 is rotated by the friction received from fiber hole 510. This rotation causes misalignment or rotation of the core position on the ferrule end surface, which leads to deterioration of optical characteristics such as an increase in connection loss. It is noted that, when glass optical fiber 210 enters fiber hole 510 so as to contact only in the vertical direction or only in the horizontal direction, friction occurs but rotation does not occur. When the axis of fiber hole 510 and the entrance axis of glass optical fiber 210 are shifted in both the vertical direction and the horizontal direction, glass optical fiber 210 is rotated.

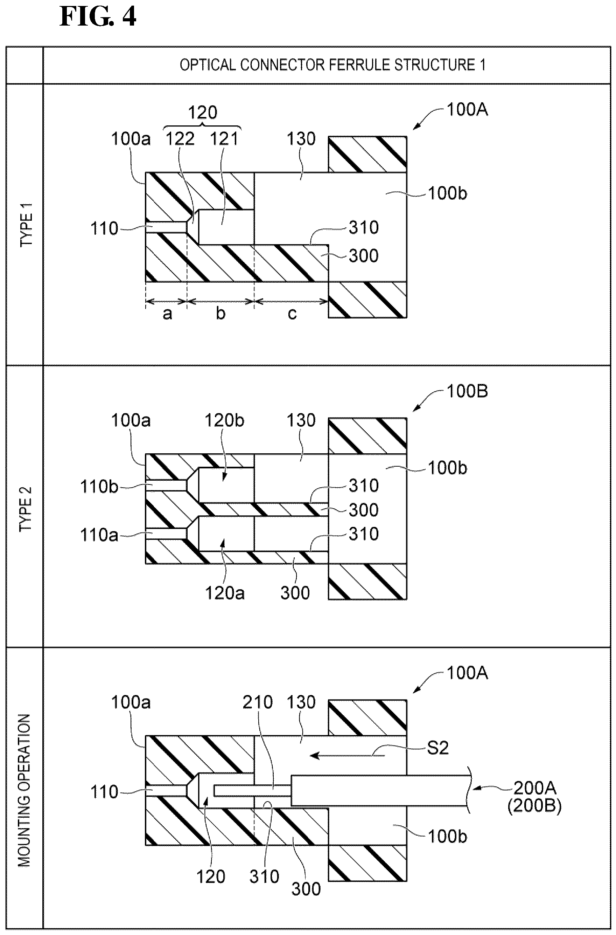

FIG. 4 is a diagram for explaining various structures of the optical connector ferrule according to the first embodiment of the present disclosure and an optical fiber mounting operation in the manufacturing process of the optical connector of the present disclosure (referred to as "optical connector ferrule structure 1" in FIG. 4). The upper row of FIG. 4 (referred to as "type 1" in FIG. 4) shows a cross-sectional structure of an optical connector ferrule 100A as an example of the first embodiment, that is, a cross-section taken along the line II-II shown in the upper row of FIG. 2. The middle row of FIG. 4 (referred to as "type 2" in FIG. 4) shows a cross-sectional structure of an optical connector ferrule 100B as another example of the first embodiment, that is, a cross-section taken along the line II-II shown in the upper row of FIG. 2. The lower row of FIG. 4 (referred to as "mounting operation" in FIG. 4) shows an operation of mounting optical connector ferrule 100A of type 1 on each end portion of the plurality of optical fibers 200A or each end portion of fiber ribbon 200B.

Optical connector ferrule 100A shown in the upper row of FIG. 4 includes front end surface 100a functioning as a housing, rear opening 100b, a plurality of fiber holes 110, a plurality of fiber introduction holes 120, and a flat surface 310. A plurality of opening ends for exposing the end surfaces of the plurality of optical fibers 200A is located on front end surface 100a. Rear opening 100b introduces at least an end portion of the plurality of optical fibers 200A into the internal space of optical connector ferrule 100A. The plurality of fiber holes 110 has a plurality of opening ends arranged on front end surface 100a, and are each provided in one-to-one correspondence with any of the plurality of optical fibers 200A. In addition, each of the plurality of fiber holes 110 extends along the first direction from front end surface 100a toward the opening end of rear opening 100b. In the example shown in the upper row of FIG. 4, the centers of the plurality of opening ends of the plurality of fiber holes 110 are arranged in a row along the second direction perpendicular to the first direction, which is a direction defined on front end surface 100a.

Further, illustrated fiber hole 110 of the plurality of fiber holes 110 has a diameter that is larger than the outer diameter of corresponding glass optical fiber 210 and less than the outer diameter of the coating of corresponding optical fiber 200A. The plurality of fiber introduction holes 120 is each provided between the plurality of fiber holes 110 and the opening end of rear opening 100b in one-to-one correspondence with any of the plurality of fiber holes 110. In addition, fiber introduction hole 120 shown in the drawing among the plurality of fiber introduction holes 120 has an introduction portion 121 and a taper portion 122. Introduction portion 121 has a diameter larger than the outer diameter of the coating of corresponding optical fiber 200A. Taper portion 122 communicates with corresponding fiber hole 110 and introduction portion 121. Flat surface 310 is an upper surface of a support 300 constituting a part of the housing, and constitutes a part of a surface defining an internal space of the housing. In addition, flat surface 310 is located between the plurality of fiber introduction holes 120 and the opening end of rear opening 100b. In the example shown in the upper row of FIG. 4, flat surface 310 directly supports the plurality of optical fibers 200A or fiber ribbon 200B so that the central axis of each of the plurality of optical fibers 200A coincides with the central axis extending along the first direction of each of the plurality of fiber holes 110. That is, in the optical connector obtained through the above-described manufacturing process, the plurality of optical fibers 200A or fiber ribbon 200B is in contact with flat surface 310 in a state where each glass optical fiber 210 located at the end thereof is inserted into corresponding fiber hole 110.

In particular, fiber hole 110, fiber introduction hole 120, and flat surface 310 are arranged along the first direction without overlapping each other. As shown in the upper row of FIG. 4, in optical connector ferrule 100A corresponding to optical connector ferrule 100 of the present disclosure, the length a of each of the plurality of fiber holes 110 defined along the first direction, the length b of each of the plurality of fiber introduction holes 120 defined along the first direction, and the length c of flat surface 310 defined along the first direction satisfy the relationship of the first condition: $a < b+c$. In addition, the length a of each of the plurality of fiber holes 110 and the length c of flat surface 310 satisfy the relationship of the second condition: $a < c$. Further, the length b of each of the plurality of fiber introduction holes 120 and the length c of flat surface 310 satisfy the relationship of the third condition: $b \leq c$.

In order to straightly insert the end portion of optical fiber 200A of the plurality of optical fibers 200A into corresponding fiber hole 110, optical fiber 200A and flat surface 310 are in contact with each other before the insertion. In addition, the end surface of optical fiber 200A needs to be exposed at front end surface 100a. Thus, in optical fiber 200A, the length of glass optical fiber 210 from which a part of the coating is removed needs to be equal to or longer than the length a of corresponding fiber hole 110. When the first condition is not satisfied, that is, when fiber hole 110 corresponding to glass optical fiber 210 from which the coating is removed is longer than the sum of the length of fiber introduction hole 120 connected to fiber hole 110 and the length of flat surface 310, the coating of optical fiber 200A comes into contact with flat surface 310 after glass optical fiber 210 is inserted into fiber hole 110, and thus the twist and rotation of optical fiber 200A cannot be suppressed. In addition, the second condition and the third condition are based on the premise that the insertion angle of optical fiber 200A needs to be determined by flat surface 310 at the time when glass optical fiber 210 of optical fiber 200A enters corresponding fiber hole 110. Thus, the length c of flat surface 310 is preferably equal to or longer than the length b of fiber introduction hole 120. Further, when the length c of flat surface 310 is less than the length b of fiber introduction hole 120, glass optical fiber 210 in optical fiber 200A enters fiber hole 110 before flat surface 310 and optical fiber 200A come into contact with each other, and thus the second condition is derived from the first condition and the third condition.

As another example, optical connector ferrule 100B shown in the middle row of FIG. 4 functions as a housing in which a group of a plurality of first fiber holes 110a and a group of a plurality of second fiber holes 110b are arranged on front end surface 100a as shown in the lower row of FIG. 2. The cross-section of optical connector ferrule 100B substantially corresponds to the ferrule cross-section taken along the line II-II shown in the upper row of FIG. 2. A plurality of first fiber introduction holes 120a is provided in the plurality of first fiber holes 110a, and support 300 having flat surface 310 is provided between the plurality of first fiber introduction holes 120a and the opening end of rear opening 100b. Similarly, a plurality of second fiber introduction holes 120b is provided in the plurality of second fiber holes 110b, and support 300 having flat surface 310 is also provided between the plurality of first fiber introduction holes 120a and the opening end of rear opening 100b. It is noted that, each of first fiber introduction hole 120a and second fiber introduction hole 120b has the same structure as fiber introduction hole 120 of type 1 shown in the upper row of FIG. 4.

As described above, optical connector ferrule 100A and optical connector ferrule 100B according to the first embodiment of the present disclosure are both provided with a structure for limiting the insertion angle of glass optical fiber 210, that is, flat surface 310 of support 300, inside. Thus, for example, when corresponding glass optical fiber 210 is inserted into any one of fiber holes 110 of optical connector ferrule 100A, as shown in the lower row of FIG. 4, glass optical fiber 210 can be inserted straight into fiber hole 110 without entering from an oblique direction by inserting optical fiber 200A into corresponding fiber hole 110 while applying the coating to flat surface 310 along insertion direction S2. As described above, when glass optical fiber 210 after the rotational adjustment is inserted straight into fiber hole 110 along insertion direction S2, the outer circumferential surface of glass optical fiber 210 receives uniform friction from fiber hole 110 regardless of the position, and thus optical fibers 200A do not rotate. As a result, even after optical connector ferrule 100A is attached to the end portion of the plurality of optical fibers 200A, the alignment state of each of the plurality of optical fibers 200A is maintained in a good state. It is noted that, fiber ribbon 200B may be applied instead of the plurality of optical fibers 200A. Further, optical connector ferrule 100B may be applied instead of optical connector ferrule 100A.

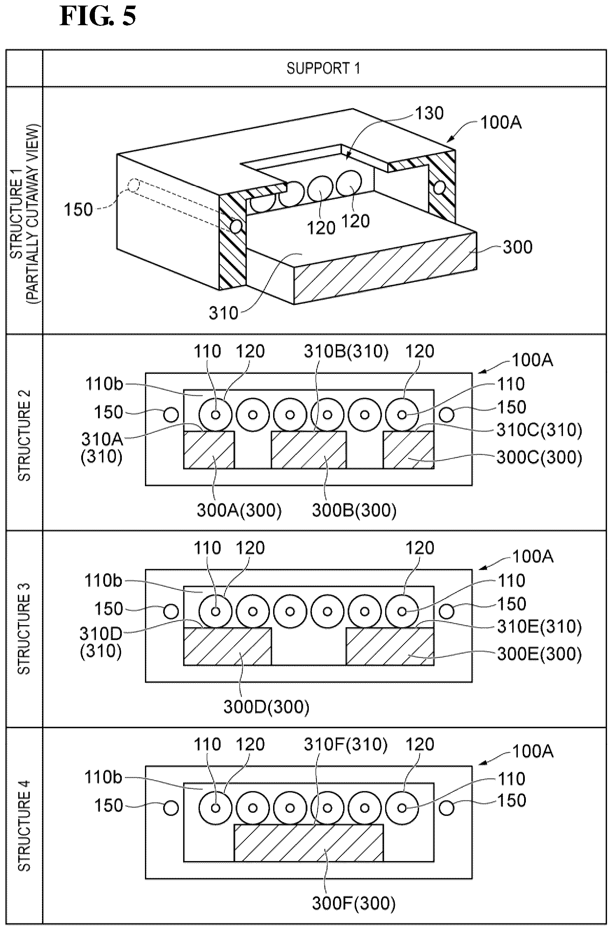

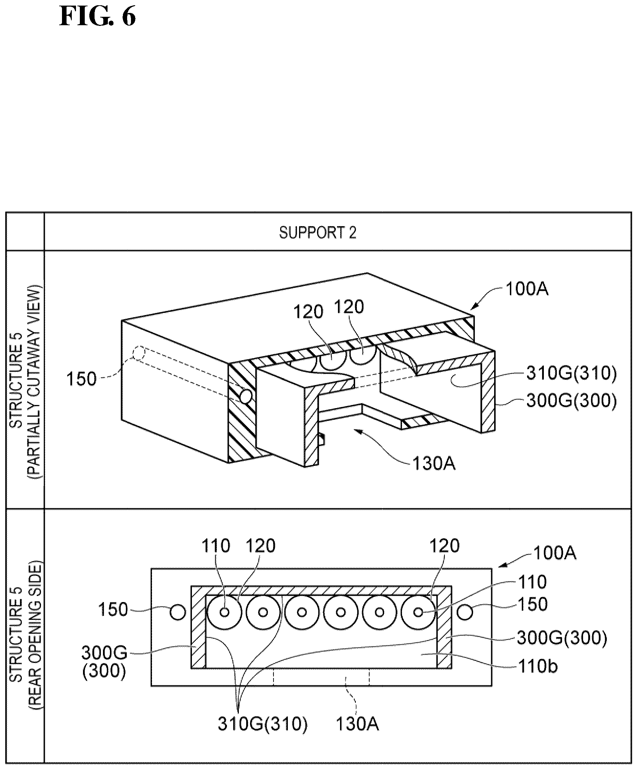

FIG. 5 is a diagram for explaining the various structures of a support including a flat surface provided in the optical connector ferrule according to the first and second embodiments of the present disclosure (referred to as "support 1" in FIG. 5). Further, FIG. 6 is a diagram for explaining still another structure of a support including a flat surface provided in the optical connector ferrule according to the first and second embodiments of the present disclosure (referred to as "support 2" in FIG. 6). The uppermost row of FIG. 5 (referred to as "structure 1 (partially cutaway view)" in FIG. 5) shows a partially cutaway view of optical connector ferrule 100A of type 1 in a state where support 300 having flat surface 310 is exposed. The second row of FIG. 5 (referred to as "structure 2" in FIG. 5) shows a three divided structure when optical connector ferrule 100A of type 1 is viewed from rear opening 100b side toward front end surface 100a side as a modification of support 300. The third row of FIG. 5 (referred to as "structure 3" in FIG. 5) shows a two divided structure when optical connector ferrule 100A of type 1 is viewed from rear opening 100b side toward front end surface 100a side as a modification of support 300. The lowermost row of FIG. 5 (referred to as "structure 4" in FIG. 5) shows a structure in which gaps are provided at both ends when optical connector ferrule 100A of type 1 is viewed from rear opening 100b side toward front end surface 100a side as a modification of support 300. Further, in the upper row of FIG. 6 (referred to as "structure 5 (partially cutaway view)" in FIG. 6) shows a partially cutaway view of optical connector ferrule 100A of type 1 in a state where supports 300G provided on the side surface and the upper surface of the ferrule interior are exposed as a modification of support 300. The lower row of FIG. 6 (referred to as "structure 5 (rear opening side)" in FIG. 6) shows support 300G of structure 5 when optical connector ferrule 100A of type 1 is viewed from rear opening 100b side toward front end surface 100a.

In the example of structure 1 shown in the upper row of FIG. 5, a partially cutaway view of optical connector ferrule 100A shown in the upper row of FIG. 4 is shown. In optical connector ferrule 100A, as described above, the plurality of fiber introduction holes 120 is arranged to face the internal space, and support 300 is provided just below adhesive introduction opening 130. Support 300 extends along a first direction from front end surface 100a toward the opening end of rear opening 100b, and also extends along a second direction perpendicular to the first direction. It is noted that, the second direction coincides with the arrangement direction of the plurality of optical fibers 200A. The plurality of optical fibers 200A or fiber ribbon 200B is held by flat surface 310 of support 300.

Meanwhile, support 300 may have a structure divided along at least one of the first direction and the second direction, that is, a structure provided with a resin reservoir in which the adhesive injected between the divided supports is retained. For example, in the example of structure 2 shown in the second row of FIG. 5, support 300 is divided into three parts along the second direction: a support 300A having a flat region 310A, a support 300B having a flat region 310B, and a support 300C having a flat region 310C. In this case, only fiber ribbon 200B is applied, but when support 300 is divided in one-to-one correspondence to the plurality of optical fibers 200A, the support applicable to the plurality of optical fibers 200A. In the example shown in the second row of FIG. 5, support 300 is divided along the second direction, but support 300 may be divided along the first direction. In this case, the length of flat surface 310 along the first direction is defined by the total length of the flat surfaces of the divided supporting bases.

It is noted that, when fiber ribbon 200B is applied, a structure such as structure 3 shown in the third row of FIG. 5 or structure 4 shown in the lowermost row of FIG. 5 is also applicable as support 300. In structure 3 shown in the third row of FIG. 5, support 300 is divided into a support 300D having a flat region 310D and a support 300E having a flat region 310E along the second direction. In structure 4 shown in the lowermost row of FIG. 5, support 300 is replaced with a support 300F (a support reduced along the second direction) having a flat region 310F, and resin reservoirs are provided on both sides. In both cases of structure 3 and structure 4, support 300 may be divided along the first direction.

As shown in the upper row and the lower row of FIG. 6, the plurality of fiber introduction holes 120 is disposed in optical connector ferrule 100A to face the internal space, but an adhesive introduction opening 130A is provided at the bottom. Support 300G, which is a modification of support 300, is provided on the side surfaces and the upper surface of the ferrule interior. Support 300G extends along the first direction from front end surface 100a toward the opening end of rear opening 100b, and also extends along the second direction (the arrangement direction of the plurality of optical fibers 200A) perpendicular to the first direction. The plurality of optical fibers 200A or fiber ribbon 200B is held by a flat region 310G of support 300G.

In the example of structure 5 (support 300G) shown in FIG. 6, side portions provided on the side surfaces in the housing and upper portion provided on the upper surface in the housing are integrally formed, but these side portion and upper portion may be formed as a part of the housing, similarly to the supports of structure 1 to structure 4. In addition, support 300G provided in the housing may be provided in the housing only at the side portions or only at the upper portion. Further, support 300G (or either of the side and upper portions) may be combined with the support of any of the above structure 1 to structure 4.

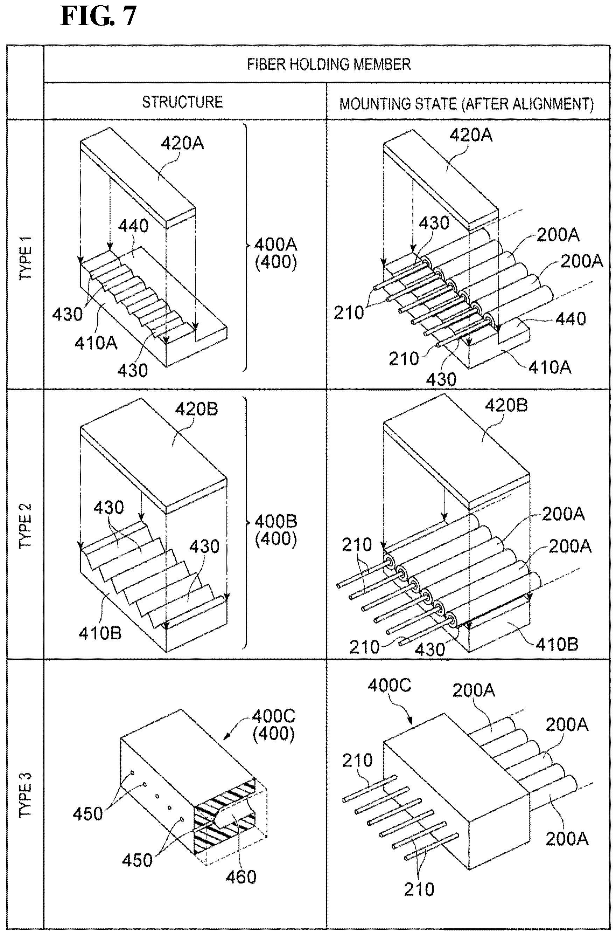

FIG. 7 is a view for explaining various structures of a fiber holding member applicable to the optical connector ferrule according to the second embodiment of the present disclosure (referred to as "fiber holding member" in FIG. 7). In each row of FIG. 7 shows, in addition to fiber ribbon 200B shown in the lower row of FIG. 1, the structure of various fiber holding members 400 (referred to as "structure" in FIG. 7) and the mounting state of fiber holding member 400 to the end of the plurality of optical fibers 200A (referred to as "mounting state" in FIG. 7). The upper row of FIG. 7 (referred to as "type 1" in FIG. 7) shows, as an example of fiber holding member 400, the structure and the mounting state of a fiber holding member 400A of type 1 that holds the portion of glass optical fiber 210 from which the resin coating is removed in each of the plurality of optical fibers 200A. In the middle row of FIG. 7 (referred to as "type 2" in FIG. 7) shows, as an example of fiber holding member 400, the structure and the mounting state of a fiber holding member 400B of type 2 that holds the resin coating portion of each of the plurality of optical fibers 200A. The lower row of FIG. 7 (referred to as "type 3" in FIG. 7) shows, as an example of fiber holding member 400, the structure and the mounting state of a fiber holding member 400C of type 3 that holds the portion of glass optical fiber 210 from which the resin coating is removed in the state in which a portion of the resin coating is housed in each of the plurality of optical fibers 200A.

Fiber holding member 400A of type 1 shown in the upper row of FIG. 7 is configured by a lower member 410A for integrally holding the plurality of optical fibers 200A, and an upper member 420A serving as a lid. Lower member 410A includes a plurality of V grooves 430 and lower member 410A having a holding portion 440 in which coating portions of the plurality of optical fibers 200A are disposed. The plurality of optical fibers 200A is mounted on lower member 410A in a state in which the respective coating portions are disposed in holding portion 440 and in a state in which the respective end portions (glass optical fibers 210 from which the coating is removed) are disposed in V grooves 430. Further, glass optical fiber 210 of the plurality of optical fibers 200A mounted on lower member 410A is sandwiched between lower member 410A and upper member 420A with the adhesive, and thus fiber holding member 400A is fixed to the exposed regions of glass optical fibers 210 of the plurality of optical fibers 200A from which the coatings are removed.

Fiber holding member 400B of type 2 shown in the middle row of FIG. 7 is fixed to the coating portions of the plurality of optical fibers 200A, unlike fiber holding member 400A of type 1. Fiber holding member 400B is also configured by a lower member 410B for integrally holding the plurality of optical fibers 200A and an upper member 420B serving as a lid. Lower member 410B is provided with a plurality of V grooves 430. The plurality of optical fibers 200A is mounted on lower member 410B in a state in which the respective coating portions are disposed in V grooves 430. Further, the coating portions of the plurality of optical fibers 200A mounted on lower member 410B is sandwiched between lower member 410B and upper member 420B via an adhesive, whereby fiber holding member 400A is fixed to the coating portions of the plurality of optical fibers 200A.

Further, fiber holding member 400C of type 3 shown in the lower row of FIG. 7 is a hole array having a through hole 450 for holding the exposed region of glass optical fiber 210 from which the coating is removed in the plurality of optical fibers 200A, and a coating housing portion 460 for housing the coating portion of the plurality of optical fibers 200A. Fiber holding member 400C is fixed to the plurality of optical fibers 200A by inserting the end portion of each of the plurality of optical fibers 200A, that is, glass optical fibers 210 from which the coatings are removed, into corresponding through holes 450 from the coating housing portion 460. Although through holes 450 of fiber holding member 400C shown in the lower row of FIG. 7 are provided to hold glass optical fibers 210. Each through hole 450 may have a large diameter to hold each coating portion of the plurality of optical fibers 200A.

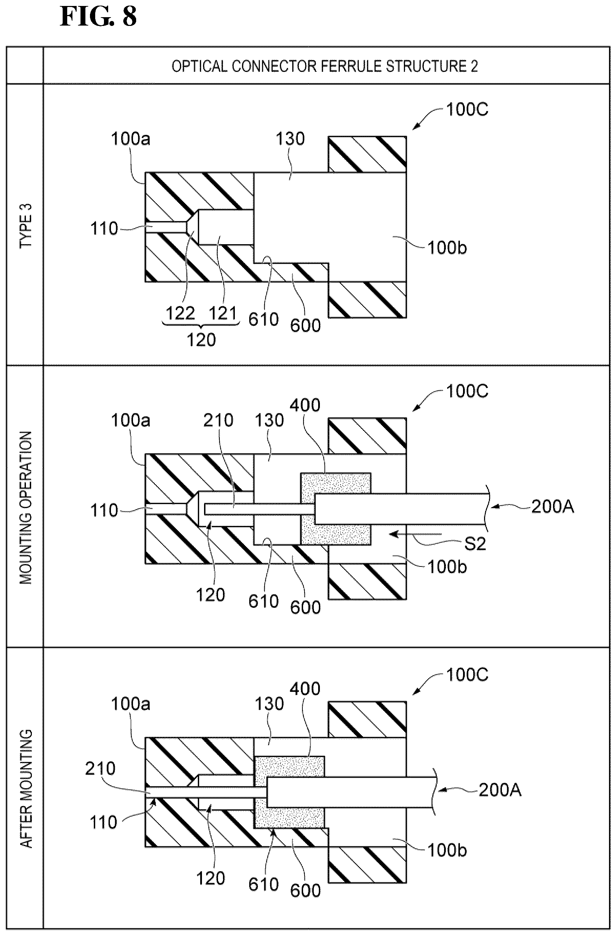

FIG. 8 is a diagram for explaining an example of the structure of the optical connector ferrule according to the second embodiment of the present disclosure, an optical fiber mounting operation in the manufacturing process of the optical connector of the present disclosure, and the cross-sectional structure of the optical connector of the present disclosure (referred to as "optical connector ferrule structure 2" in FIG. 8). An optical connector ferrule 100C according to the second embodiment houses, in the internal space, fiber holding member 400 represented by type 1 to type 3 shown in FIG. 7 in addition to the fiber ribbon 200 shown in the lower row of FIG. 1. The upper row of FIG. 8 (referred to as "type 3" in FIG. 8) shows a cross-sectional view of an example of optical connector ferrule 100C according to the second embodiment, taken along the line II-II in FIG. 2. The middle row of FIG. 8 (referred to as "mounting operation" in FIG. 8) shows an operation of mounting optical connector ferrule 100C of type 3 on the ends of the plurality of optical fibers 200A or the ends of fiber ribbon 200B. In the lower row of FIG. 8 (referred to as "after mounting" in FIG. 8), a cross-sectional structure of the optical connector of the present disclosure is shown in which fiber holding member 400 holding the plurality of optical fibers 200A is installed on a flat surface 610 defining the internal space of optical connector ferrule 100C.

Optical connector ferrule 100C shown in the upper row of FIG. 8 functions as a housing for housing the end portions of the plurality of optical fibers 200A, similarly to optical connector ferrule 100A shown in the upper row of FIG. 4. However, optical connector ferrule 100C is different from optical connector ferrule 100A in that it has a structure for housing fiber holding members 400 with various structures shown in FIG. 7. That is, optical connector ferrule 100C includes front end surface 100a, rear opening 100b, a plurality of fiber holes 110, a plurality of fiber introduction holes 120, and flat surface 610. A plurality of opening ends for exposing the end surfaces of the plurality of optical fibers 200A is located on front end surface 100a. As shown in the middle row of FIG. 8, at least the end portions of the plurality of optical fibers 200A to which fiber holding member 400 is fixed are introduced into the internal space of optical connector ferrule 100C from rear opening 100b along the insertion direction S2. In this case, fiber holding member 400 is disposed on flat surface 610. The plurality of fiber holes 110 has a plurality of opening ends disposed on front end surface 100a, and are each provided in one-to-one correspondence to any of the plurality of optical fibers 200A. In addition, each of the plurality of fiber holes 110 extends along the first direction from front end surface 100a toward the opening end of rear opening 100b. In the example shown in the upper row of FIG. 8, the centers of the plurality of opening ends of the plurality of fiber holes 110 are arranged in a row along the second direction perpendicular to the first direction, which is a direction defined on front end surface 100a.

Further, illustrated fiber hole 110 of the plurality of fiber holes 110 has a diameter that is larger than the outer diameter of corresponding glass optical fiber 210 and less than the outer diameter of the coating of corresponding optical fiber 200A. The plurality of fiber introduction holes 120 are each provided between the plurality of fiber holes 110 and the opening end of rear opening 100b in one-to-one correspondence with any of the plurality of fiber holes 110. In addition, fiber introduction hole 120 shown in the drawing among the plurality of fiber introduction holes 120 has introduction portion 121 and taper portion 122. Introduction portion 121 has a diameter larger than the outer diameter of the coating of corresponding optical fiber 200A. Taper portion 122 communicates with corresponding fiber hole 110 and introduction portion 121. Flat surface 610 is an upper surface of a support 600 constituting a part of optical connector ferrule 100C, and constitutes a part of a surface defining an internal space of optical connector ferrule 100C. In addition, flat surface 610 is located between the plurality of fiber introduction holes 120 and the opening end of rear opening 100b. In the example shown in the middle row of FIG. 8, flat surface 610 directly supports fiber holding member 400 introduced into the ferrule along insertion direction S2 so that the central axes of each of the plurality of optical fibers 200A to which fiber holding member 400 is fixed coincides with the central axes extending along the first direction of each of the plurality of fiber holes 110.

It is noted that, fiber hole 110, fiber introduction hole 120, and flat surface 610 are portions arranged along the first direction without overlapping each other, as in optical connector ferrule 100A according to the first embodiment. However, in optical connector ferrule 100C according to the second embodiment, a step is provided between fiber introduction hole 120 and flat surface 610. The lengths of fiber hole 110, fiber introduction hole 120, and flat surface 610 defined along the first direction satisfy the first to third conditions described above, as in optical connector ferrule 100A according to the first embodiment. Further, support 600 having flat surface 610 may be divided along at least one of the first direction and the second direction as shown in FIG. 5.

As described above, optical connector ferrule 100C according to the second embodiment of the present disclosure is different from the first embodiment in that a structure where the insertion angle of glass optical fiber 210 is defined while fiber holding members 400 are fixed, that is, flat surface 610 of support 600 is provided inside the ferrule. Thus, for example, as shown in the middle row of FIG. 8, when glass optical fibers 210 (the end portions of optical fibers 200A to which fiber holding member 400 is fixed) corresponding to fiber holes 110 of optical connector ferrule 100C is inserted, optical fibers 200A are inserted into corresponding fiber holes 110 while the bottom surface of fiber holding member 400 abuts on flat surface 610 along insertion direction S2. Thus, glass optical fiber 210 can be inserted straight into fiber hole 110 without entering from an oblique direction. As described above, when glass optical fiber 210 after the rotational adjustment is inserted straight into fiber hole 510 along insertion direction S2, the outer circumferential surface of glass optical fiber 210 receives uniform friction from fiber hole 510 regardless of the position, and thus optical fibers 200A do not rotate. As a result, even after optical connector ferrule 100C is attached to the end portion of the plurality of optical fibers 200A or fiber ribbon 200B, the alignment state of each of the plurality of optical fibers 200A is maintained in a good state.

In the optical connector obtained through the above-described manufacturing process, the plurality of optical fibers 200A or fiber ribbon 200B is separated from flat surface 310 in a state where each glass optical fiber 210 located at the end thereof is inserted into corresponding fiber hole 110, as shown in the lower row of FIG. 8. However, fiber holding member 400 that directly holds the plurality of optical fibers 200A or fiber ribbon 200B directly contacts flat surface 610, and thus the plurality of optical fibers 200A or fiber ribbon 200B is indirectly supported by flat surface 610.

As can be understood from the description of the embodiments and modifications described above, the present specification also includes the disclosure of the following aspects.

[Appendix]

An optical connector ferrule including a housing that functions as a ferrule configured to be attached to end portions of a plurality of optical fibers each including a glass portion and a coating covering the glass portion, the coatings being partially removed at the end portions, wherein

the housing has

a front end surface at which a plurality of opening ends configured to allow end surfaces of the plurality of optical fibers to be exposed therethrough are located,

a rear opening configured to allow at least the end portions of the plurality of optical fibers to be introduced into an internal space of the housing, and

a plurality of fiber holes formed to have the plurality of opening ends and to correspond in one-to-one to the plurality of optical fibers, the plurality of fiber holes each extending along a first direction from the front end surface toward an opening end of the rear opening, being arranged such that centers of the plurality of opening ends form one or more rows along a second direction that is defined on the front end surface and that is perpendicular to the first direction, and each being defined by an inner wall surface having a diameter larger than an outer diameter of each of the glass portions and smaller than an outer diameter of each of the coatings,

a plurality of fiber introduction holes formed between the plurality of fiber holes and the opening end of the rear opening and corresponding in one-to-one to the plurality of fiber holes, each of the plurality of fiber introduction holes including an introduction portion defined by an inner wall surface having a diameter larger than the outer diameter of each of the coatings and a taper portion allowing communication between the introduction portion and a corresponding one of the plurality of fiber holes, and

a flat surface forming a portion of a surface defining the internal space of the housing, the flat surface being located between the plurality of fiber introduction holes and the opening end of the rear opening and being configured to directly or indirectly support the plurality of optical fibers such that a central axis of each of the plurality of optical fibers substantially coincides with a central axis of a corresponding one of the fiber holes extending in the first direction.

REFERENCE SIGNS LIST

100, 100A, 100B, 100C optical connector ferrule
100a front end surface
100b rear opening
110 fiber hole
110a first fiber hole
110b second fiber hole
120 fiber introduction hole
120a first fiber introduction hole
120b second fiber introduction hole
121 introduction portion
122 taper portion
130, 130A adhesive introduction opening
150 guide hole
200A optical fiber
200B fiber ribbon
210 glass optical fiber
211 core
212 common cladding
213 marker
214 stress applying member
250 storage container
251 single-core optical fiber
252 single-core glass optical fiber
300, 300A, 300B, 300C, 300D, 300E, 300F, 300G support
310 flat surface
310A, 310B, 310C, 310D, 310E, 310F, 310G flat region
400, 400A, 400B, 400C fiber holding member
410A, 410B lower member
420A, 420B upper member
430 V groove
440 holding portion
450 through hole
460 coating housing portion
500 optical connector ferrule
500a front end surface
500b rear opening
510 fiber hole
520 fiber introduction hole
521 introduction portion
522 taper portion
530 adhesive introduction opening

600 support
610 flat surface
S1 adjustment direction
S2 insertion direction
A contact point
MCF multi-core optical fiber
PMF polarization maintaining optical fiber
BF bundle fiber

**Claims**

1. An optical connector ferrule configured to be attached to end portions of a plurality of optical fibers each including a glass portion and a coating covering the glass portion, the coatings being partially removed at the end portions,

    wherein the optical connector ferrule has

        a front end surface at which a plurality of opening ends configured to allow end surfaces of the plurality of optical fibers to be exposed therethrough are located,
        a rear opening configured to allow the plurality of optical fibers to be introduced into an internal space of the optical connector ferrule, and
        a plurality of through holes into each of which a corresponding one of the plurality of optical fibers is to be inserted, the plurality of through holes each extending between a corresponding one of the plurality of opening ends and the internal space along a first direction from the front end surface toward the rear opening,

    wherein the plurality of opening ends is arranged such that centers of the plurality of opening ends form one or a plurality of rows along a second direction perpendicular to the first direction,
    wherein each of the plurality of through holes includes a fiber hole with one of the opening ends and a fiber introduction hole allowing communication between the fiber hole and the internal space,
    wherein each of the fiber holes has a diameter larger than an outer diameter of each of the glass portions and smaller than an outer diameter of each of the coatings,
    wherein each of the fiber introduction holes includes an introduction portion having a diameter larger than the outer diameter of each of the coatings and a taper portion allowing communication between the introduction portion and a corresponding one of the fiber holes,
    wherein the internal space is defined by a plurality of surfaces, and

    wherein at least one flat surface among the plurality of surfaces is configured to support the plurality of optical fibers such that a central axis of each of the plurality of optical fibers coincides with a central axis of a corresponding one of the fiber holes extending in the first direction.

2. The optical connector ferrule according to claim 1, wherein a length a of each of the fiber holes defined along the first direction, a length b of each of the fiber introduction holes defined along the first direction, and a length c of the flat surface defined along the first direction satisfy a relationship below.

$$a < b + c$$

3. The optical connector ferrule according to claim 1, wherein a length a of each of the fiber holes defined along the first direction and a length c of the flat surface defined along the first direction satisfy a relationship below.

$$a < c$$

4. The optical connector ferrule according to claim 1, wherein a length b of each of the fiber introduction holes defined along the first direction and a length c of the flat surface defined along the first direction satisfy a relationship below.

$$b \leq c$$

5. The optical connector ferrule according to any one of claim 1 to claim 4,
wherein the flat surface includes a plurality of flat regions formed by dividing the flat surface along at least one of the first and second directions.

6. An optical connector comprising:

    the optical connector ferrule according to any one of claim 1 to claim 5;
    the plurality of optical fibers; and
    a fiber holding member configured to hold the plurality of optical fibers in a state where the plurality of optical fibers are arranged in one or more rows along the second direction,
    wherein the fiber holding member is placed on the flat surface while holding the plurality of optical fibers.

7. The optical connector according to claim 6, wherein the fiber holding member is a resin layer configured to integrally hold the coatings of the plurality of optical fibers and configured to suppress positional deviations between the plurality of optical fibers.

8. The optical connector according to claim 6, wherein the fiber holding member has V grooves configured to hold the plurality of optical fibers in a state where the glass portions or the coatings of the plurality of optical fibers are in contact with the V grooves.

9. The optical connector according to claim 6, wherein the fiber holding member includes a hole array configured to hold the plurality of optical fibers in a state where the hole array is in contact with the glass portions or the coatings of the plurality of optical fibers.

10. The optical connector according to any one of claim 6 to claim 9, wherein each of the plurality of optical fibers is any one of a multi-core optical fiber, a polarization maintaining fiber, and a bundle fiber.

# FIG. 1

# FIG. 2

| | OPTICAL CONNECTOR FERRULE |
|---|---|
| PERSPECTIVE VIEW | 130  100b  100  100a  150  110  II  I  II  I  150 |
| FRONT VIEW 1 | 100  100a  150  110  150 |
| FRONT VIEW 2 | 110b  100a  150  110a  150 |

# FIG. 3

| MOUNTING OPERATION (STANDARD OPTICAL CONNECTOR) |
|---|

## FIG. 4

## FIG. 5

| | SUPPORT 1 |
|---|---|
| STRUCTURE 1 (PARTIALLY CUTAWAY VIEW) | |
| STRUCTURE 2 | |
| STRUCTURE 3 | |
| STRUCTURE 4 | |

# FIG. 6

| SUPPORT 2 | | |
| --- | --- | --- |
| STRUCTURE 5 (PARTIALLY CUTAWAY VIEW) | | |
| STRUCTURE 5 (REAR OPENING SIDE) | | |

# FIG. 7

| | FIBER HOLDING MEMBER | |
|---|---|---|
| | STRUCTURE | MOUNTING STATE (AFTER ALIGNMENT) |
| TYPE 1 | 420A 440 400A(400) 430 410A 430 | 420A 430 200A 200A 210 440 210 410A 430 |
| TYPE 2 | 420B 430 430 400B(400) 410B | 420B 200A 200A 210 210 430 410B |
| TYPE 3 | 400C(400) 450 450 460 | 400C 200A 200A 210 200A 210 |

## FIG. 8

| INTERNATIONAL SEARCH REPORT | International application No. |
|---|---|
| | PCT/JP2023/005809 |

**A. CLASSIFICATION OF SUBJECT MATTER**

*G02B 6/36*(2006.01)i
FI: G02B6/36

According to International Patent Classification (IPC) or to both national classification and IPC

**B. FIELDS SEARCHED**

Minimum documentation searched (classification system followed by classification symbols)

G02B6/24; G02B6/255; G02B6/36-6/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 6264375 B1 (SUMITOMO ELECTRIC INDUSTRIES, LTD.) 24 July 2001 (2001-07-24) column 4, line 4 to column 7, line 25, fig. 1-10 | 1-6 |
| Y | | 7-10 |
| X | JP 2021-026217 A (FUJIKURA LTD.) 22 February 2021 (2021-02-22) paragraphs [0018]-[0055], fig. 1-17 | 1-9 |
| Y | | 7-10 |
| Y | JP 2004-045751 A (SUMITOMO ELECTRIC IND., LTD.) 12 February 2004 (2004-02-12) paragraphs [0003]-[0010], [0013]-[0020], fig. 1-4 | 7, 9-10 |
| Y | JP 2000-098186 A (SUMITOMO ELECTRIC IND., LTD.) 07 April 2000 (2000-04-07) paragraphs [0020], [0023], fig. 1-3, 5 | 7, 10 |
| Y | JP 2007-193181 A (FUJIKURA LTD.) 02 August 2007 (2007-08-02) paragraphs [0014]-[0018], fig. 1-4 | 7, 10 |
| Y | JP 2019-066634 A (SUMITOMO ELECTRIC IND., LTD.) 25 April 2019 (2019-04-25) paragraphs [0027]-[0064], fig. 1-4, 6 | 9-10 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 April 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2023/005809** |

### C.  DOCUMENTS CONSIDERED TO BE RELEVANT

| Category* | Citation of document, with indication, where appropriate, of the relevant passages | Relevant to claim No. |
|---|---|---|
| Y | WO 2013/172322 A1 (FURUKAWA ELECTRIC CO., LTD.) 21 November 2013 (2013-11-21) paragraphs [0037]-[0057], [0087]-[0088], fig. 1, 5, 9 | 10 |
| Y | WO 2021/187178 A1 (SUMITOMO ELECTRIC IND., LTD.) 23 September 2021 (2021-09-23) paragraphs [0044], [0068]-[0079], fig. 2, 13-14 | 10 |
| A | JP 11-072644 A (SUMITOMO ELECTRIC IND., LTD.) 16 March 1999 (1999-03-16) paragraphs [0023]-[0027], fig. 7-9 | 1-10 |

Form PCT/ISA/210 (second sheet) (January 2015)

# EP 4 502 687 A1

| INTERNATIONAL SEARCH REPORT | International application No. |
|---|---|
| Information on patent family members | PCT/JP2023/005809 |

| Patent document<br>cited in search report | | | Publication date<br>(day/month/year) | Patent family member(s) | | | Publication date<br>(day/month/year) |
|---|---|---|---|---|---|---|---|
| US | 6264375 | B1 | 24 July 2001 | (Family: none) | | | |
| JP | 2021-026217 | A | 22 February 2021 | US<br>paragraphs [0036]-[0079], fig.<br>1-17<br>CN | 2022/0229245<br><br><br>113614600 | A1<br><br><br>A | |
| JP | 2004-045751 | A | 12 February 2004 | (Family: none) | | | |
| JP | 2000-098186 | A | 07 April 2000 | (Family: none) | | | |
| JP | 2007-193181 | A | 02 August 2007 | (Family: none) | | | |
| JP | 2019-066634 | A | 25 April 2019 | (Family: none) | | | |
| WO | 2013/172322 | A1 | 21 November 2013 | (Family: none) | | | |
| WO | 2021/187178 | A1 | 23 September 2021 | CN | 115280207 | A | |
| JP | 11-072644 | A | 16 March 1999 | US<br>column 7, line 63 to column 8,<br>line 17, fig. 11-13 | 6062740 | A | |

Form PCT/ISA/210 (patent family annex) (January 2015)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2022052129 A

**Non-patent literature cited in the description**

• **MASAKI OHMURA et al.** Multi-Fiber Connectors for Data Center Applications. *SEI TECHNICAL RE-VIEW*, April 2018 (86), 29-34